# EUROPÄISCHE PATENTSCHRIFT

(11) **EP 1 177 073 B1**
(45) Veröffentlichungstag und Bekanntmachung des Hinweises auf die Patenterteilung: **03.12.2003**
(21) Anmeldenummer: 00927021.6
(22) Anmeldetag: 22.04.2000
(51) Int. Cl.: B25G 1/06, A47L 1/16, A47L 1/06, B60S 3/04

(54) **REINIGUNGSGERÄT FÜR KRAFTFAHRZEUGE**
CLEANING DEVICE FOR MOTOR VEHICLES
APPAREIL DE NETTOYAGE POUR VEHICULES A MOTEUR

(30) Priorität: 07.05.1999 DE 19920951
(43) Veröffentlichungstag der Anmeldung: 06.02.2002
(73) Patentinhaber: Veropa DKFM. Peter Vogt GmbH, 1031 Wien (AT)
(72) Erfinder: VOGT, Peter, A-1030 Wien (AT); HOFFELNER, Volkwin, A-3423 St. Andrä Wördern (AT)
(74) Vertreter: Weber, Dieter, Dr.
(86) Internationale Anmeldenummer: EP0003652
(87) Internationale Veröffentlichungsnummer: WO00067956

(56) Entgegenhaltungen:
- WO-A-82/02017
- DE-A- 3 426 748
- DE-C- 913 411
- FR-A- 2 763 550
- GB-A- 161 719
- US-A- 4 124 915
- US-A- 4 302 862

## Beschreibung

Die vorliegende Erfindung betrifft ein Reinigungsgerät zum Reinigen der Fensterflächen und/oder der Karosserie von Kraftfahrzeugen, mit einem länglichen Griffabschnitt und mit einem Besenabschnitt, der mindestens eine Reihe von Borsten aufweist, wobei der Besenabschnitt relativ zu dem Griffabschnitt in mindestens zwei verschiedene Positionen verdrehbar ist, wobei in einer Position die Reihe der Borsten sich in etwa senkrecht zum Griffabschnitt erstreckt und in der anderen Position die Reihe der Borsten im wesentlichen in einer von der Drehachse des Besenteils und dem Griffabschnitt aufgespannten Ebene liegt und wobei diese Positionen durch Raststellen an einer Gelenkverbindung zwischen Griffabschnitt und Besenabschnitt definiert werden.

Ein solches Reinigungsgerät ist aus der französischen Patentanmeldung mit der Veröffentlichungsnummer FR-A- 2 763 550 bekannt. Bei dieser bekannten Reinigungsvorrichtung ist am Ende eines geschwungenen, länglichen Griffteils ein U-förmiger Bügel vorgesehen, an dessen freien Enden eine Eiskratzerklinge befestigt ist. Am Fuß des U-förmigen Bügels und am Übergang zu dem länglichen Griffteil ist ein Besenabschnitt angeordnet, der zwei leicht geschwungene Borstenreihen aufweist. Dieser Besenabschnitt ist in zwei verschiedene Positionen verdrehbar, nämlich in eine Position senkrecht zu dem länglichen Griffabschnitt, wobei sich die Borstenreihen im wesentlichen parallel zu der ebenfalls im wesentlichen senkrecht zum Griffabschnitt erstreckenden Eiskratzerkante erstrecken, und in eine Stellung im wesentlichen parallel zu dem länglichen Griffabschnitt, wobei die Borstenreihen im wesentlichen senkrecht zu der Eiskratzerkante verlaufen.

Diese bekannte Vorrichtung hat allerdings den Nachteil, daß der Besenabschnitt sich im Gebrauch des öfteren verdreht und nicht die eingestellte Position beibehält. Außerdem ist diese bekannte Vorrichtung sehr sperrig und läßt sich nur schlecht oder gar nicht in Türfächern oder anderen schmalen Fächern eines Kraftfahrzeuges verstauen. Wegen des relativ langen und geschwungenen Griffteils, über welches die Kräfte auf das Besenteil und den Eiskratzer übertragen werden, muß das Griffteil aus einem relativ stabilen und damit teuren Kunststoff hergestellt werden. Weiterhin werden bei der bekannten Vorrichtung die Raststellen gebildet durch den Querschnitt halbkreisförmiger, stabartiger Vorsprünge und entsprechender Aufnahmen, die nach Überwindung eines maximalen Anfangsdrehmomentes sofort nachgeben. Insbesondere durch kleinere Sand- und Schmutzteilchen, die schon einen geringen Abstand zwischen dem Besenteil und dem Handgriffteil hervorrufen, kann dieses Drehmoment sehr undefiniert werden.

Gegenüber diesem Stand der Technik liegt der vorliegenden Erfindung die Aufgabe zugrunde, ein Reinigungsgerät der oben genannten Art zu schaffen, welches verbesserte Gebrauchseigenschaften hat und welches vorzugsweise auch besser verstaubar und preiswerter herstellbar sein sollte.

Diese Aufgabe wird dadurch gelöst, daß die Raststellen derart ausgebildet sind, daß zum unbeabsichtigten Herausdrehen aus einer der Positionen des Besenteiles ein Drehmoment von mindestens 1 Newtonmeter (Nm) erforderlich ist, indem die Gelenkverbindung zwischen Griffabschnitt und Besenabschnitt aus einem in einer passenden Aufnahmeöffnung gehaltenen Zapfen in Form eines Pyramidenstumpfes mit dem Querschnitt eines regelmäßigen Polygons, vorzugsweise mit quadratischer oder oktogonaler Grundfläche, besteht.

Diese Erhöhung des für eine unbeabsichtigte bzw. gewaltsame Verdrehung des Besenelementes relativ zum Griffabschnitt erforderlichen Drehmomentes verbessert die Gebrauchsfähigkeit des Reinigungsgerätes erheblich. Insbesondere wenn auf großen Frontscheiben, wie sie mittlerweile vor allem bei größeren Pkw oder sogenannten Großraumlimousinen üblich sind, große Schneemengen oder nasser pappiger Schnee entfernt werden müssen, sind die auf den Besenabschnitt wirkenden Kräfte beträchtlich, wobei sich auch nicht vermeiden läßt, daß auf den beiden Seiten der Drehachse des Besens unterschiedliche Kräfte auftreten. Diese Unterschiede in den auftretenden Kräften führen jedoch selten zu einem Drehmoment, das einen Wert von 1 Nm übersteigt. Selbstverständlich kann in der bevorzugten Ausführungsform vorgesehen werden, daß das mindestens erforderliche Drehmoment zum gewaltsamen Verdrehen noch größer ist und zum Beispiel einen Wert von 2 oder 3 oder mehr Nm hat. Darüber hinaus versteht es sich, daß diese relativ großen Drehmomente nur dann aufgebracht werden müssen, wenn ein unabsichtliches, gewaltsames Verdrehen des Besenteils gegenüber dem Handgriffteil erfolgt und daß ansonsten die Verbindung zwischen diesen beiden Teilen so ausgestaltet ist, daß sie auch aktiv ohne Verdrehung zunächst außer Rasteingriff gebracht werden können, so daß anschließend eine Verdrehung sehr leicht erfolgen kann. Hierfür reicht es auch aus, den Rasteingriff nur teilweise aufzuheben, um die zur Verdrehung erforderlichen Kräfte zu verringern.

Erfindungsgemäß ist weiterhin vorgesehen, daß die Gelenkverbindung bzw. Rastverbindung zwischen dem Handgriffabschnitt und dem Besenteil aus einem im Querschnitt ein gleichmäßiges Polygon bildenden Zapfen besteht, der in einer passend geformten Aufnahmeöffnung aufgenommen ist. Beim Verdrehen müssen dann entweder elastische Kräfte zur Aufweitung der Aufnahmeöffnung aufgebracht werden oder es muß gleichzeitig eine axiale Verschiebung ausgelöst werden, die Zapfen und Aufnahmeöffnung auseinander bewegt. Hierzu ist eine Neigung der Seitenflächen des im Querschnitt polygonförmigen Zapfens erforderlich, wobei im folgenden als bevorzugte Ausführungsform ein Polygon mit einem quadratischen Querschnitt betrachtet werden soll, so daß der Zapfen, wenn zusätzlich auch entsprechend der bevorzugten Ausführungsform die Seitenflächen geneigt sind, die Form eines Pyramidenstumpfs mit quadratischer Grundfläche hat.

Dabei sollte entsprechend der bevorzugten Ausführungsform der Erfindung die Neigung der Seitenflächen des Pyramidenstumpfes zur Achse des Pyramidenstumpfes zwischen 4 und 15° liegen, vorzugsweise zwischen 6 und 9°. Die konkrete Neigung hängt allerdings auch von dem Widerstand ab, den die entsprechende Verbindung zwischen Besenteil und Handgriffabschnitt einer axialen Auseinanderbewegung von Zapfen und Aufnahmeöffnung entgegensetzt.

Dieser Widerstand wird vorzugsweise durch eine Feder oder dergleichen erzeugt, so daß also Zapfen und Aufnahmeöffnung bzw. Handgriffabschnitt und Besenteil in Eingriff miteinander federnd vorgespannt sind. Beim gewaltsamen Verdrehen eines Pyramidenstumpfes in einer passend ausgestalteten Aufnahmeöffnung um die Achse des Pyramidenstumpfes üben die geneigten Kanten des Pyramidenstumpfes Druck auf die Flächen der Aufnahmeöffnung auf, und durch diesen Druck einer geneigten Kante auf eine Fläche oder auf die untere Kante der Aufnahmeöffnung wird eine Kraft erzeugt, die auch eine Komponente in axialer Richtung hat, wobei diese Komponente proportional zum Sinus des Neigungswinkels der Seitenflächen des Pyramidenstumpfes zu dessen Achse ist. Durch passende Wahl der Feder und durch passende Wahl des Neigungswinkels und weiterhin unter Berücksichtigung der Reibungkoeffizienten zwischen den Materialien des Zapfens und der Wände der Aufnahmeöffnung kann man die Gelenkverbindung zwischen Besenteil und Handgriffabschnitt so ausgestalten, daß auf jeden Fall das gewünschte Mindestdrehmoment aufgebracht werden muß, um den Besenabschnitt relativ zum Handgriffabschnitt gewaltsam aus einer gegebenen Position zu verdrehen.

Bei einem Pyramidenstumpf mit quadratischem Querschnitt als in eine entsprechende Aufnahmeöffnung eingreifenden Zapfen sollte die Aufnahmeöffnung den Zapfen an mindestens drei Seiten dicht umfassen, wahlweise kann die Aufnahmeöffnung den Zapfen selbstverständlich auch auf der vierten Seite umfassen oder es könnten auch nur auf zwei gegenüberliegenden Seiten Wände vorgesehen sein, die beim Verdrehen des Zapfens elastisch auseinandergebogen werden. Insbesondere in letzterem Fall, vorzugsweise aber auch dann, wenn der Zapfen an mehr als zwei gegenüberliegenden Seiten in Eingriff mit den Wänden einer Aufnahmeöffnung steht, sollte zusätzlich eine die Drehachse definierende Verbindung zwischen Besenteil und Handgriffabschnitt vorgesehen sein.

In der bevorzugten Ausführungsform wird diese Drehachsenverbindung gebildet durch eine in dem Polygonzapfen in dessen Stirnfläche vorgesehene, zentrale zylindrische Aufnahmeöffnung und einen entsprechenden, vorzugsweise als Hohlzapfen ausgebildeten Zapfen, der sich im Zentrum der gegenüberliegenden Aufnahmeöffnung, konkret von einem Grund dieser Aufnahmeöffnung aus, passend in die zylindrische Öffnung des Polygonzapfens erstreckt. Zweckmäßigerweise ist dieser zylindrische Zapfen seinerseits als Hohlzapfen ausgebildet und in dem Hohlraum dieses Zapfens ist ein Betätigungsknopf mit einem Betätigungsstift und einer den Stift umgebenden Druckfeder angeordnet. Der Stift ist wiederum so lang ausgeführt, daß er sich durch eine in der verbleibenden Stirnseite des Hohlzapfens vorgesehenen Führungsöffnung erstreckt und darin geführt ist, wobei die Feder sich zwischen dem Grund des Hohlzapfens und dem Betätigungsknopf abstützt und so den Betätigungsknopf mit dem zentralen Führungsstift tendenziell aus dem Hohlzapfen herausdrückt.

Das freie Ende des Führungsstiftes ist wiederum über eine Schraube oder ein anderes Verbindungselement mit dem Grund der zylindrischen Aufnahmeöffnung im Polygonzapfen bzw. einem mit diesem verbundenen Teil verbunden. Auf diese Weise spannt die Feder, die über den Betätigungsknopf und die Abstützung am Grund des Hohlzapfens den Führungsstift in seiner Führungsöffnung zurückzieht bzw. -drückt, die beiden gegenüberliegenden Teile, nämlich den Polygonzapfen und die entsprechende Aufnahmeöffnung, in festen Eingriff miteinander. In der bevorzugten Ausführungsform ist der Polygonzapfen bzw. Pyramidenstumpfzapfen an der Oberseite eines Besenabschnittes angeordnet, während ein Haltekopf mit einer Aufnahmeöffnung für den Pyramidenstumpf am Handgriffabschnitt vorgesehen ist.

Durch einen Druck auf den Betätigungsknopf kann jedoch die Feder zusammengedrückt werden, wobei der Stift durch die Führungsöffnung am unteren Ende des Hohlzapfens gleitet und dadurch den Pyramidenstumpf und die zugehörige Aufnahmeöffnung außer Eingriff bringt, so daß in dieser Position der Besenabschnitt leicht gegenüber dem Handgriffabschnitt verdreht werden kann. In dieser Position wird die eine Drehachse zwischen Besenabschnitt und Handgriffabschnitt definierende Verbindung durch den in einer Führungsbohrung am Grund des zylindrischen Hohlzapfens drehbar geführten Führungsstift gebildet.

In der bevorzugten Ausführungsform ist der Handgriffabschnitt teleskopierbar ausgebildet und besteht aus mindestens zwei teleskopartig ineinanderschiebbaren Metallrohren. Zusätzlich können die freien Enden dieser Metallrohre mit Kunststoff ummantelt sein bzw. Aufsteckelemente aus Kunststoff aufweisen, von denen einer zum Beispiel den Haltekopf bzw. Gelenkkopf für die Verbindung mit dem Besenabschnitt bildet. Das andere freie Ende des Handgriffabschnittes ist zweckmäßigerweise mit einem Eiskratzerelement ausgerüstet, wobei das Eiskratzerelement seinerseits in der bevorzugten Ausführungsform der Erfindung eine Eiskratzerklinge und eine elastische Lippe aus Gummi oder einem ähnlichen elastomeren Material aufweist.

Die Kante des Eiskratzers und die elastische Lippe erstrecken sich vorzugsweise parallel zueinander und im wesentlichen senkrecht zur Längsachse des Handgriffabschnitts. Zweckmäßigerweise ist das Eiskratzerelement um eine Längsachse des Handgriffelementes drehbar an diesem angebracht, was es ermöglicht, das Eiskratzerelement im wesentlichen in derselben Ebene auszurichten, in der sich auch das im wesentlichen längliche, stabförmige Besenelement erstreckt.

Vorzugsweise ist die elastische Lippe des Eiskratzers um 10 bis 50% länger als die Eiskratzerklinge. Erfahrungsgemäß darf nämlich die Klinge eine gewisse Maximallänge nicht übersteigen, damit man mit ihr wirksam Eis von den Scheiben eines Kraftfahrzeuges abkratzen kann. Dagegen kann die Abstreiflippe, die sich elastisch der Oberfläche auch einer gebogenen Windschutzscheibe gut anpaßt, ohne weiteres länger bzw. breiter ausgestaltet sein.

Weitere Vorteile, Merkmale und Anwendungsmöglichkeiten der vorliegenden Erfindung werden deutlich anhand der folgenden Beschreibung einer bevorzugten Ausführungsform und der dazugehörigen Figuren. Es zeigen:
- Figur 1: eine Seitenansicht des erfindungsgemäßen Reinigungsgerätes mit unterbrochenem Handgriffabschnitt,
- Figur 1A: eine perspektivische Ansicht des Eiskratzerabschnittes,
- Figur 2: eine perspektivische Ansicht des Besenabschnittes,
- Figur 3: nochmals den Besenabschnitt in perspektivischer Ansicht, jedoch ohne aufgesetzten Verbindungskopf,
- Figur 4: eine perspektivische Ansicht der Unterseite des Verbindungskopfes für den Besenabschnitt und
- Figur 5: eine Schnittdarstellung des Verbindungskopfes und der entsprechenden Verbindungsteile des Besenabschnitts.

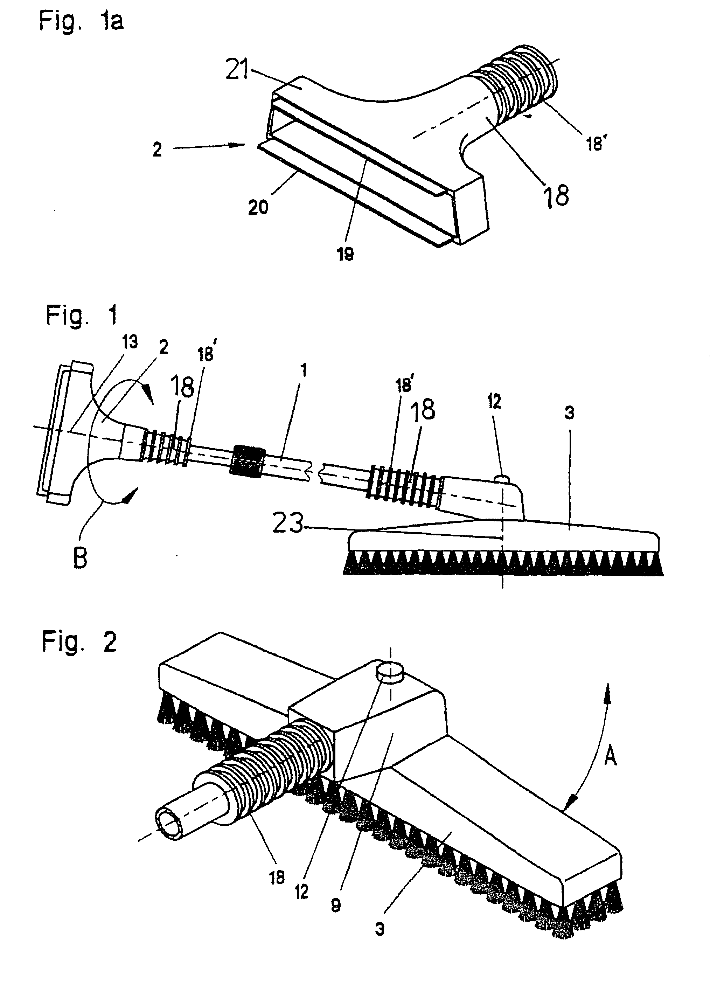

Man erkennt in Figur 1 einen länglichen, aus Teleskoprohren und auf deren Enden aufgesteckten Kunststoffteilen bestehenden Handgriffabschnitt 1, wobei an einem Ende ein Verbindungskopf 9 für einen Besenabschnitt 3 aufgesteckt ist und am anderen Ende ein Eiskratzer 2 aufgesteckt ist. Details des Eiskratzers 2 sind schematisch in Figur 1 A wiedergegeben. Der Hauptteil des Eiskratzers 2 besteht aus Kunststoff und weist ein Aufsteckrohr 18 mit kreisförmig umlaufenden Rippen oder Ringen 18', sowie einen Halteabschnitt 21 für eine Eiskratzerklinge 19 und eine Gummidichtlippe 20 auf. Dabei ist die Eiskratzerklinge 19 bewußt kürzer bzw. schmaler gehalten als die Abstreiflippe 20, da für ein wirksames Abkratzen von Eis von einer Windschutzscheibe oder einer sonstigen Scheibe eines Kraftfahrzeuges die aktive Kantenlänge nicht zu groß sein darf, um die für das Loskratzen des Eises erforderliche Kraft über die ganze Klingenlänge hinweg aufbringen zu können. Dagegen ist das Abstreifen von Wasser oder losen Eis- oder Schneeresten mit Hilfe der aus einem sehr elastischen Material bestehenden Abstreiflippe 20 auch auf größerer Breite möglich, zumal sich die elastische Abstreiflippe 2 auch etwaigen Krümmungen einer Windschutzscheibe gut anpaßt.

Die Halterung für die Eiskratzerklinge 19 ist vorzugsweise so ausgestaltet, daß die Eiskratzerklinge 19 austauschbar ist. Zum Beispiel kann die Eiskratzerklinge auch wendbar sein und sie kann unter Umständen vier brauchbare Kanten aufweisen, so daß durch mehrfaches Wenden insgesamt vier effektive Schabekanten zur Verfügung stehen.

Die Aufsteckrohre 18 des Eiskratzers 2 und des Verbindungskopfes 9, die mit angeformten, umlaufenden Rippen 18' versehen sind, sind vorzugsweise genügend lang ausgebildet, um als gut erfaßbare Handgriffe zu dienen, wobei die angeformten Rippen bzw. Ringe 18' den Händen einen sehr guten Halt bieten und wobei auch das Kunststoffmaterial dieser Handgriffe in Verbindung mit den Rippen insbesondere im Winter angenehm zu ergreifen ist, daß die Wärmeleitung entsprechender Kunststoffmaterialien schlecht ist und zwischen den Rippen ein entsprechendes Luftpolster verbleibt, so daß der Benutzer nicht so leicht kalte Hände bekommt, wenn er das Reinigungsgerät im Bereich der Rohrabschnitte 18 ergreift und betätigt.

Es versteht sich jedoch, daß in Figur 1A und auch in den übrigen Figuren die Einzelteile im wesentlichen nur schematisch dargestellt sind und die konkrete Ausgestaltung und das Design noch deutlich von der Form der dargestellten Elemente abweichen kann. Auch die relativen Größen- und Maßverhältnisse können in der Praxis deutlich verschieden von den dargestellten Größen- und Maßverhältnissen sein.

Der Handgriffabschnitt 1 besteht aus zwei teleskopartig ineinandergeschobenen Metallrohren, auf die die Rohrabschnitte 18 des Eiskratzers und auch ein entsprechender Rohrabschnitt 18 eines Verbindungskopfes 9 für den Besenabschnitt 3 aufgesteckt sind. Wie in Figur 1 durch den Doppelpfeil B angedeutet wird, ist der Eiskratzer 2 um die Längsachse 13 des Handgriffabschnitts 3 drehbar, d.h. entweder der Rohrabschnitt 18 ist auf dem eingesteckten Teleskoprohr drehbar oder die Teleskoprohre sind ihrerseits ineinander drehbar. Stattdessen könnte allerdings auch der Rohrabschnitt 18 auf dem eingesteckten Rohr des Handgriffabschnittes drehbar sein. Wie man anhand der Figur 1 erkennt, kann aufgrund dieser relativen Drehbarkeit des Eiskratzers 2 gegenüber dem Verbindungskopf 9 für den Besenabschnitt 3 der Eiskratzer immer so gedreht werden, daß seine Querrichtung, in welcher er die größten Abmessungen hat, immer parallel zu einer Ebene liegt, wie sie auch durch die Längserstreckung des Besenabschnittes 3 und des Handgriffabschnittes 1 definiert wird. Eine dieser Positionen ist in Figur 1 dargestellt.

In Figur 2 ist eine Position des Besenabschnittes dargestellt, die gegenüber der in Figur 1 dargestellten um 90° verdreht ist. In diesem Fall könnte man den Eiskratzer 2 gegenüber den übrigen Teilen bzw. gegenüber dem Verbindungskopf 9 ebenfalls um 90° verdrehen, so daß er, ausgehend von der Position in Figur 1, senkrecht zur Papierebene verlaufen würde und damit wiederum parallel zur Längserstreckung des Besenabschnittes 3 ausgerichtet wäre. Dies ermöglicht es, das Reinigungsgerät in jeder der beiden eingestellten Positionen des Besenabschnittes 3 platzsparend zu verstauen, wobei die Teleskopausführung des Handgriffabschnitts 1 ebenfalls ein platzsparendes Zusammenschieben aller Teile ermöglicht. In der in Figur 1 dargestellten Position ist das gesamte Reinigungsgerät etwas länger, hat dafür aber eine sehr geringe Tiefe (gemessen in Richtung senkrecht zur Papierebene), die der Breite des Besenabschnittes 3 senkrecht zu den Borstenreihen entspricht. Diese Breite ist vorzugsweise nicht größer als die des Verbindungskopfes 9, der wiederum allenfalls geringfügig breiter ist als die übrigen Teile des Handgriffabschittes.

Im übrigen ermöglicht die Teleskopierbarkeit des Handgriffabschnitts 1 ein Ausfahren dieses Handgriffabschnittes auf eine Länge, die nahezu dem Doppelten des Reinigungsgerätes im zusammengeschobenen Zustand entspricht, so daß auch relativ hoch liegende und von der Karosserieseite weit entfernte Abschnitte einer Windschutzscheibe, wie man sie zum Beispiel bei Großraumlimousinen vorfindet, auch von klein gewachsenen Personen noch erreicht werden können.

In der in Figur 2 dargestellten Position mit entsprechend verdrehtem Eiskratzer hätte das Reinigungsgerät eine nochmals verkürzte Länge, wäre dafür aber etwas tiefer, entsprechend der Summe aus der Höhe des Verbindungskopfes 9 und des Besenabschnitts 3 (gemessen entlang der Drehachse 23 in Figur 1).

Eine Drehung des Besenabschnittes 3 gegenüber dem Handgriffabschnitt 1 erfolgt im allgemeinen nur dadurch, daß der Betätigungsknopf 12 herabgedrückt wird, der damit Verbindungselemente am Besenabschnitt 3 und am Verbindungskopf 9 auseinanderbewegt, so daß der Besenabschnitt 3 leicht gegenüber dem Handgriffabschnitt bzw. gegenüber dem Verbindungskopf 9 drehbar wird, und zwar entlang des Doppelpfeiles A, wie er in Figur 2 eingezeichnet ist.

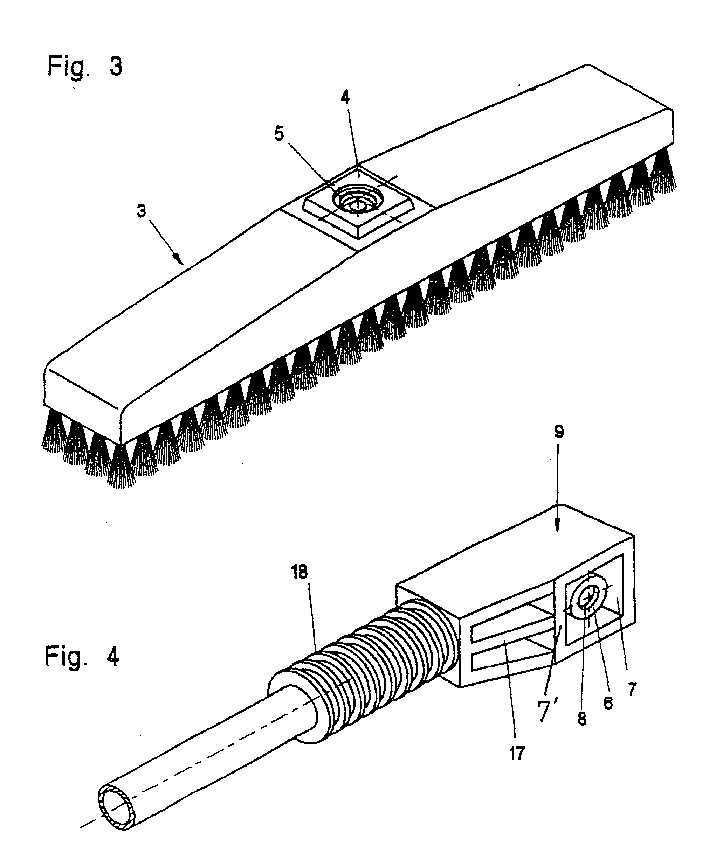

Die Figuren 3 und 4 zeigen einige Details der Verbindung zwischen Besenabschnitt 3 und dem Verbindungskopf 9.

Es versteht sich, daß auch hier wiederum die Figuren die einzelnen Teile nur schematisch wiedergeben und daß zum Beispiel der Besenabschnitt auch wesentlich schmaler und nur mit ein oder zwei Borstenreihen ausgeführt werden könnte, wobei die Borstenreihen auch nicht notwendigerweise exakt gerade, sondern auch entlang einer geschwungenen oder gebogenen Linie verlaufen könnten, wobei aber dennoch die Borstenreihen im wesentlichen die Längserstreckung des Besenteils 3 definieren.

Wie man sieht, ist auf der Oberseite des Besenteils 3 ein relativ kurzer Verbindungszapfen in Form eines Pyramidenstumpfes 4 vorgesehen. Im zusammengesetzten Zustand greift dieser Pyramidenstumpf 4 in eine entsprechende quadratische Öffnung des Verbindungskopfes 9 ein, die von Wänden 7 definiert wird, die im wesentlichen dem Verlauf der Seitenwände des Pyramidenstumpfes 4 angepaßt sind.

Dabei ist es allerdings auch möglich und in bestimmten Anwendungsfällen auch bevorzugt, die Wand 7' fortzulassen oder nach innen in den Verbindungskopf 9 zurückzuversetzen, so daß sie nicht mit dem Pyramidenstumpf 4 in Eingriff steht, wenn Besenteil und Verbindungskopf 9 zusammengesetzt sind. Mit anderen Worten, der Zapfen 4 in Form eines Pyramidenstumpfes wird dann nur auf drei Seiten von den Wänden 7 umfaßt, wobei aber gleichwohl die Ausrichtung des Besenteils 3 relativ zu dem Verbindungskopf 9 in insgesamt vier möglichen Winkelpositionen definiert ist, wobei jeweils zwei wegen der Symmetrie des Besenteils praktisch identisch sind.

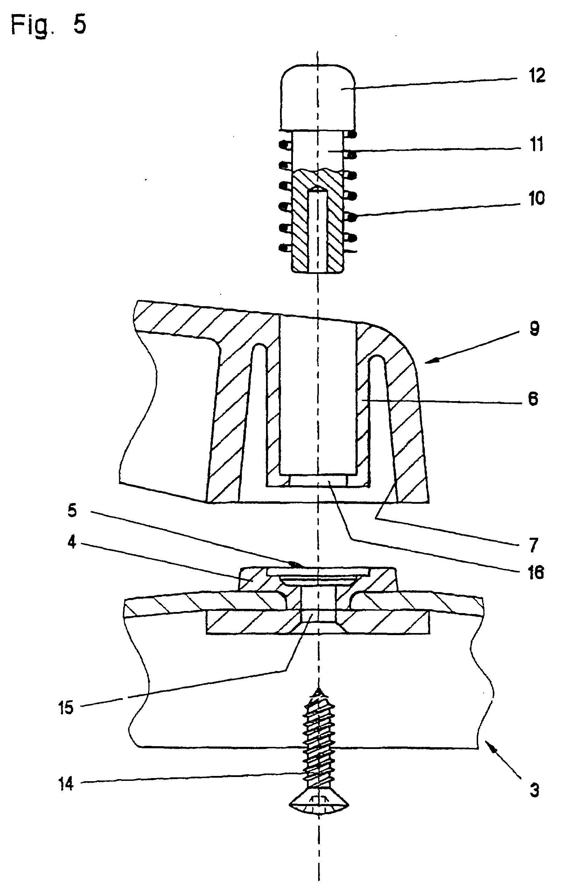

Der Pyramidenstumpf 4 weist außerdem noch eine zentrale, zylindrische Öffnung 5 auf, in die ein Hohlzapfen 6 eingreift, der in der Aufnahmeöffnung des Verbindungskopfes 9 für den Zapfen 4 hervorragt. Dieser Hohlzapfen 6 hat noch eine Führungsbohrung 8, die im folgenden noch in Verbindung mit Figur 5 erläutert wird.

Der Hohlzapfen 6 und die Aussparung 5 können in ihrer Länge bzw. Tiefe dabei so gestaltet sein, daß sie noch miteinander in Eingriff stehen, wenn der Pyramidenstumpf 4 und die Wände 7, 7' der Aufnahmeöffnung des Verbindungskopfes axial bereits so weit auseinander bewegt sind, daß die Drehposition des Besenteils 3 relativ zum Verbindungskopf 9 nicht mehr durch den Eingriff zwischen diesen Teilen festgelegt wird. Andererseits ist jedoch aufgrund der Tatsache, daß dieser Zapfen 4 pyramidenförmig ausgebildet ist und auch die Wände 7 sich dieser Pyramidenform anpassen, eine Verdrehung des Besenteils gegenüber dem Verbindungskopf auch dann möglich, wenn Besenteil 3 und Verbindungskopf 9 nicht durch einen Druck auf den Betätigungsknopf 12 axial auseinanderbewegt werden. Ein gewaltsames Verdrehen des Besenteils 3 gegenüber dem Verbindungskopf 9 führt dann nämlich dazu, daß über die geneigten Seitenflächen des Pyramidenstumpfes 4 die zwischen den Wänden 7 und den Wänden des Pyramidenstumpfes 4 wirkenden Kräfte auch axiale Komponenten haben, die zu einer Auseinanderbewegung des Besenteils 3 und des Verbindungskopfes 9 in axialer Richtung führen, bis die Seitenflächen des Pyramidenstumpfes und die Wände 7 außer Eingriff kommen und damit das Besenteil 3 gegenüber dem Verbindungskopf 9 gedreht werden kann. Hierzu ist allerdings die Überwindung erheblicher Kräfte erforderlich, und das aufzubringende Drehmoment beträgt mindestens 1 Nm. Um aber auch solchen Drehmomenten unbeschadet standzuhalten, ist die Wandstärke der Wände 7 entsprechend groß, so daß auch bei einem gewaltsamen Verdrehen des Besenteils 3 gegenüber dem Verbindungskopf 9 die Verbindungselemente insgesamt nicht beschädigt werden.

Einzelheiten der Verbindung erkennt man am besten in der Schnittdarstellung gemäß Figur 5. In Figur 5 ist nochmals der Verbindungskopf 9 ausschnittsweise und in einem Längsschnitt dargestellt, ebenso wie ein Abschnitt des Besenteils 3 mit dem Pyramidenstumpf 4. Im zusammengesetzten Zustand ist der Pyramidenstumpf 4 in dem von den Wänden 7 des Verbindungskopfes 9 gebildeten Hohlraum aufgenommen, und die geneigten Außenwände des Pyramidenstumpfes 4 liegen an den ebenfalls entsprechend geneigten Innenflächen der Wände 7 des Verbindungskopfes an. Der Hohlzapfen 6 greift dabei in die Aussparung 5 ein, die in der Oberseite des Pyramidenstumpfes 4 vorgesehen ist. In dem Hohlzapfen 6 ist ein Führungsstift 11 mit einem Betätigungsknopf 12 und einer den Führungsstift 11 umgebenden Feder 10 angeordnet. Der Führungsstift 11 selbst erstreckt sich durch eine Bohrung 16 in der unteren Stirnwand des Hohlzapfens 6 und wird in dieser Bohrung 16 gleitend und mit geringem Spiel geführt. Die Feder 10 stützt sich zwischen dem Betätigungsknopf 12 und der Innenseite der unteren Stirnwand des Hohlzapfens 6 ab.

Der Besenabschnitt 3 weist zentral in seinem pyramidenstumpfförmigen Verbindungszapfen 4 bzw. am Grund der zylindrischen Aussparung 5 eine durchgehende Bohrung 15 auf, durch die eine Schraube hindurchgreift, die von unten her in den Führungsstift 11 eingeschraubt ist. Auf diese Weise ist der Führungsstift 11 fest mit dem Besenabschnitt 3 verbunden, wobei die an dem Betätigungsknopf 12 angreifende Druckfeder 10 dafür sorgt, daß der Führungsstift 11 in der Führungsöffnung 16 so weit wie möglich zurückgezogen wird und dadurch den pyramidenstumpfförmigen Verbindungszapfen 4 in den von den Wänden 7 umschlossenen Hohlraum des Verbindungskopfes 9 hineinzieht, wobei gleichzeitig auch der Hohlzapfen 6 in die Aussparung 5 in der Stirnfläche des Zapfens 4 eingreift. Anstelle der Verbindung über eine Schraube 14 könnte jedoch der Stift 11 auch mit Rastelementen versehen sein und die Bohrung 15 in dem Verbindungszapfen 4 des Besenteiles 3 könnte passend ausgestaltet sein und entsprechende Gegenelemente zur Verrastung des Führungsstiftes 11 aufweisen. In diesem Fall könnte man auf die Schraube 14 verzichten.

Durch Druck auf den Betätigungsknopf 12, der einstückig mit dem Führungszapfen 11 verbunden ist und der lediglich einen größeren Durchmesser hat, welcher dem Innendurchmesser des Hohlzapfens 6 angepaßt ist und der außerdem eine Abstützschulter für die Feder 10 bietet, kann der Führungsstift 11 gegen die Wirkung der Feder 10 nach unten weiter durch die Führungsbohrung 16 hindurchgedrückt werden, wobei auch der Besenabschnitt 3 nach unten bewegt wird, so daß schließlich der Zapfen 4 mit den Wänden 7 außer Eingriff kommt.

In dieser Stellung kann dann der Besenabschnitt 3 leicht in eine der gewünschten Positionen verdreht werden, die anschaulich in den Figuren 1 und 2 dargestellt sind, wobei die Drehachse 23 durch die gemeinsame Achse des Führungsstifftes 11 und der Führungsbohrung 16 definiert wird, die allerdings mit der Achse des Hohlzapfens 6 zusammenfällt. Es versteht sich, daß anstelle des quadratischen Pyramidenstumpfes auch andere, polygonartige Querschnitte oder auch andere Querschnittsformen mit vorzugsweise vierzähliger oder achtzähliger, zum Beispiel aber auch mit drei-, fünf- oder sechszähliger Symmetrieachse verwendet werden könnten. Der Querschnitt könnte zum Beispiel auch sternförmig sein. Bei allen Querschnittsformen würde jedoch eine entsprechende Neigung der Seitenwände in Verbindung mit der Feder 10 bewirken, daß beim gewaltsamen Verdrehen Kräfte zwischen den Seitenwänden eines entsprechenden Zapfens und den Seitenwänden des Verbindungskopfes 9 auch eine axiale Komponente enthalten, die für ein gewaltsames Verdrehen ausreichend groß sein muß, um die von der Feder 10 ausgeübte Druckkraft zu überwinden, so daß sich ein entsprechender Zapfen aus der Aufnahmeöffnung axial herausbewegt und dadurch gedreht werden kann. Es müssen also lediglich die Feder 10 und die Neigungen der Seitenwände passend aufeinander abgestimmt werden, damit für ein gewaltsames Verdrehen ein Drehmoment von mindestens 1 Nm erforderlich ist.

Dies reicht normalerweise aus, um den im normalen Gebrauch eines solchen Schneebesens auftretenden Kräften zu widerstehen, so daß der Besenabschnitt sich nicht beim Gebrauch verdreht, ohne daß dies beabsichtigt ist.

Das bevorzugte Material, schlagfestes Polystyrol, ist relativ preiswert und für die vorgesehenen Bauteile auch hinreichend haltbar, da größere Biegekräfte von den teleskopierbaren Metallrohren aufgenommen werden. Der Verbindungskopf 9, der unter Umständen ebenfalls relativ großen Kräften widerstehen muß, ist entsprechend dickwandig ausgeführt. Insgesamt ermöglicht die erfindungsgemäße Ausführung eines Reinigungsgerätes eine relativ einfache und preiswerte Herstellung der Einzelteile, die auch sehr einfach und schnell zusammenzumontieren sind.

## Patentansprüche

1. Reinigungsgerät zum Reinigen der Fensterflächen und/oder der Karosserie von Kraftfahrzeugen, mit einem länglichen Griffabschnitt (1) und einem länglichen Besenabschnitt (3), wobei der Besenabschnitt (3) relativ zum Griffabschnitt (1) in mindestens zwei verschiedene Positionen verdrehbar ist und wobei sich der Besenabschnitt (3) in einer Position im wesentlichen senkrecht zu der Längsausdehnung des Griffabschnittes (1) erstreckt und in der anderen Position im wesentlichen in der von der Drehachse (23) und dem Griffabschnitt (1) aufgespannten Ebene liegt und wobei die mindestens zwei Positionen des Besenabschnittes durch Raststellen an einer Gelenkverbindung (4, 5, 6, 7, 8) zwischen Griffabschnitt (1) und Besenabschnitt (3) definiert werden, **dadurch gekennzeichnet, daß** zum gewaltsamen Verdrehen des Besenabschnittes (3) gegenüber dem Griffabschnitt (1) ein Drehmoment von mindestens 1 Nm erforderlich ist, indem die Gelenkverbindung (4, 5, 6, 7, 8) zwischen Griffabschnitt (1) und Besenabschnitt (3) aus einem in einer passenden Aufnahmeöffnung gehaltenen Zapfen (4) in Form eines Pyramidenstumpfes mit dem Querschnitt eines regelmäßigen Polygons, vorzugsweise mit quadratischer oder oktogonaler Grundfläche, besteht.

2. Reinigungsgerät nach Anspruch 1, **dadurch gekennzeichnet, daß** die Neigung der Seitenflächen des Zapfens (4) zur Achse (23) des Zapfens zwischen 4 und 15°, vorzugsweise zwischen 6° und 9° liegt.

3. Reinigungsgerät nach einem der Ansprüche 1 und 2, **dadurch gekennzeichnet, daß** die Kanten zwischen benachbarten Seitenflächen abgefast oder gerundet und/oder die oberen Ecken des Pyramidenstumpfes abgefast oder gerundet sind.

4. Reinigungsgerät nach einem der Ansprüche 1 bis 3, **dadurch gekennzeichnet, daß** an dem dem Zapfen (4) gegenüberliegenden Teil eine Aufnahmeöffnung mit dem polygonalen Querschnitt des Zapfens entsprechend angeordneten Wänden (7) vorgesehen ist, die den Zapfen (4) an mindestens zwei gegenüberliegenden Seiten eng umfassen, wobei die Innenflächen der Wände (7) so ausgebildet sind, daß sie im wesentlichen auf der gesamten Außenfläche der zugeordneten Wände des Zapfens (4) anliegen.

5. Reinigungsgerät nach einem der Ansprüche 1 bis 4, **dadurch gekennzeichnet, daß** der Zapfen (4) in seiner Stirnfläche eine zentrale, kreisförmige Aussparung aufweist, während sich am gegenüberliegenden Teil zwischen den Wänden der Aufnahmeöffnung ein passender zylinderischer Zapfen (6) erstreckt, der in der zentralen Aussparung des polygonalen Zapfens aufnehmbar ist.

6. Reinigungsgerät nach Anspruch 5, **dadurch gekennzeichnet, daß** der zylindrische Zapfen (6) als Hohlzapfen ausgebildet ist und mindestens auf seiner der zylindrischen Aufnahmeöffnung des Polygonzapfens abgewandten Seite offen ist.

7. Reinigungsgerät nach einem der Ansprüche 1 bis 6, **dadurch gekennzeichnet, daß** Besenteil (3) und Handgriffabschnitt (1) an ihrer Gelenkverbindung federnd in Eingriff miteinander vorgespannt sind.

8. Reinigungsgerät nach Anspruch 6 und 7, **dadurch gekennzeichnet, daß** in dem Hohlzapfen ein Betätigungsknopf (12) mit einem Betätigungsstift und einer diesen umgebenden Feder (10) aufgenommen ist, wobei der Betätigungsstift in einer Bohrung in der Stirnseite des zylindrischen Zapfens (8) geführt und über eine Schraube oder über Rastelemente mit dem Besenabschnitt (3) verbunden ist.

9. Reinigungsgerät nach einem der Ansprüche 1 bis 8, **dadurch gekennzeichnet, daß** der Griffabschnitt und der Besenabschnitt zumindest teilweise aus schlagfestem Polystyrol bestehen, wobei die Wandstärke der den Polygonzapfen (4) aufnehmenden Aufnahmeöffnung mindestens 2, vorzugsweise mindestens 3 oder 4 mm beträgt.

10. Reinigungsgerät nach einem der Ansprüche 1 bis 9, **dadurch gekennzeichnet, daß** der Griffabschnitt teleskopierbar ist und teleskopartig ineinander verschiebbare Metallrohre aufweist.

11. Reinigungsgerät nach einem der Ansprüche 1 bis 10, **dadurch gekennzeichnet, daß** an dem dem Besenabschnitt (3) abgewandten Ende des Reinigungsgerätes ein Eiskratzerelement (2) an dem Griffabschnitt (1) angebracht ist.

12. Reinigungsgerät nach Anspruch 11, **dadurch gekennzeichnet, daß** das Eiskratzerelement (2) relativ zu dem am gegenüberliegenden Ende angebrachten Besenabschnitt um eine Längsachse (13) des Griffabschnitts (1) drehbar ist.

13. Reinigungsgerät nach Anspruch 11 oder 12, **dadurch gekennzeichnet, daß** das Eiskratzerelement (2) eine vorzugsweise auswechselbare Eiskratzerklinge (11) und einen mit einer elastischen Abstreiflippe (20) versehenen Abstreifteil aufweist.

14. Reinigungsgerät nach Anspruch 13, **dadurch gekennzeichnet, daß** sich die Eiskratzerklinge (11) und die elastische Lippe (20) des Abstreifelementes im wesentlichen parallel zueinander und im wesentlichen senkrecht zur Längsachse (13) des Griffabschnittes (1) erstrecken.

15. Reinigungsgerät nach Anspruch 14, **dadurch gekennzeichnet, daß** die elastische Lippe (20) des Abstreifelementes zwischen 10 und 50% länger ausgebildet ist als die Eiskratzklinge (11).

16. Reinigungsgerät nach einem der Ansprüche 1 bis 14, **dadurch gekennzeichnet, daß** der Griffabschnitt (1) mindestens teilweise eine Kunststoffummantelung aufweist, die ihrerseits im Abstand angeformte, umlaufende Kunststoffringe (18) aufweist, welche die Griffigkeit des Handgriffabschnittes (1) verbessern.

## Claims

1. A cleaning implement for cleaning the window surfaces and/or the body of motor vehicles, comprising an elongate handle portion (1) and an elongate brush portion (3), wherein the brush portion (3) is rotatable relative to the handle portion (1) into at least two different positions and wherein the brush portion (3) in one position extends substantially perpendicularly to the longitudinal extent of the handle portion (1) and in the other position it is substantially in the plane defined by the axis of rotation (23) and the handle portion (1) and wherein the at least two positions of the brush portion are defined by detent locations at a pivot connection (4, 5, 6, 7, 8) between the handle portion (1) and the brush portion (3), **characterised in that** a torque of at least one Nm is required for rotating the brush portion (3) by force with respect to the handle portion (1), insofar as the pivot connection (4, 5, 6, 7, 8) between the handle portion (1) and the brush portion (3) comprises a projection (4) which is held in a matching receiving opening and which is in the form of a truncated pyramid of the cross-section of a regular polygon, preferably with a square or octagonal base surface.

2. A cleaning implement according to claim 1 **characterised in that** the inclination of the side surfaces of the projection (4) relative to the axis (23) of the projection is between 4 and 15°, preferably between 6° and 9°.

3. A cleaning implement according to one of claims 1 and 2 **characterised in that** the edges between adjacent side surfaces are chamfered or rounded and/or the upper corners of the truncated pyramid are chamfered or rounded.

4. A cleaning implement according to one of claims 1 to 3 **characterised in that** provided at the part opposite the projection (4) is a receiving opening with walls (7) which are arranged to correspond to the polygonal cross-section of the projection and which closely embrace the projection (4) at at least two opposite sides, wherein the inside surfaces of the walls (7) are such that they bear substantially against the entire outside surface of the associated walls of the projection (4).

5. A cleaning implement according to one of claims 1 to 4 **characterised in that** in its end face the projection (4) has a central circular aperture while extending on the opposite part between the walls of the receiving opening is a matching cylindrical projection (6) which can be received in the central aperture of the polygonal projection.

6. A cleaning implement according to claim 5 **characterised in that** the cylindrical projection (6) is in the form of a hollow projection and is open at least on its side that is remote from the cylindrical receiving opening of the polygonal projection.

7. A cleaning implement according to one of claims 1 to 6 **characterised in that** the brush portion (3) and the handle portion (1) are resiliently biased into engagement with each other at their pivot connection.

8. A cleaning implement according to claim 6 and claim 7 **characterised in that** an actuating knob (12) with an actuating stem and a spring (10) surrounding same is received in the hollow projection, wherein the actuating stem is guided in a bore in the end of the cylindrical projection (8) and is connected to the brush portion (3) by way of a screw or by latching elements.

9. A cleaning implement according to one of claims 1 to 8 **characterised in that** the handle portion and the brush portion at least partially comprise impact-resilient polystyrene, wherein the wall thickness of the receiving opening accommodating the polygonal projection (4) is at least 2 and preferably at least 3 or 4 mm.

10. A cleaning implement according to one of claims 1 to 9 **characterised in that** the handle portion is telescopic and has metal tubes which are telescopically displaceable in each other.

11. A cleaning implement according to one of claims 1 to 10 **characterised in that** an ice scraper element (2) is mounted to the handle portion (1) at the end of the cleaning implement, that is remote from the brush portion (3).

12. A cleaning implement according to claim 11 **characterised in that** the ice scraper element (2) is rotatable about a longitudinal axis (13) of the handle portion (1) relative to the brush portion mounted at the opposite end.

13. A cleaning implement according to claim 11 or claim 12 **characterised in that** the ice scraper element (2) has a preferably replaceable ice scraper blade (19) and a squeegee portion provided with an elastic squeegee lip (20).

14. A cleaning implement according to claim 13 **characterised in that** the ice scraper blade (19) and the elastic lip (20) of the squeegee element extend substantially parallel to each other and substantially perpendicularly to the longitudinal axis (13) of the handle portion (1).

15. A cleaning implement according to claim 14 **characterised in that** the elastic lip (20) of the squeegee element is between 10 and 50% longer than the ice scraper blade (19).

16. A cleaning implement according to one of claims 1 to 14 **characterised in that** the handle portion (1) at least in part has a plastic sheathing which in turn has peripherally extending plastic rings (18) which are formed thereon at a spacing and which improve the grippability of the handle portion (1).

## Revendications

1. Appareil de nettoyage destiné à nettoyer les surfaces des vitres et/ou la carrosserie de véhicules à moteur, comportant une section allongée formant manche (1 ) et une section allongée formant balai (3), la section formant balai (3) étant apte à tourner par rapport à la section formant manche (1) dans au moins deux positions différentes et la section formant balai (3) s'étendant dans une position sensiblement perpendiculaire à l'extension longitudinale de la section formant manche (1) et dans l'autre position sensiblement dans le plan passant par l'axe de rotation (23) et la section formant manche (1) et les deux positions au moins de la section formant balai étant définies par des emplacements d'encliquetage au niveau d'une liaison articulée (4, 5, 6, 7, 8) entre la section formant manche (1 ) et la section formant balai (3), **caractérisé en ce qu'**un couple de rotation d'au moins 1 Nm est nécessaire pour réaliser la rotation forcée de la section formant balai (3) par rapport à la section formant manche (1), la liaison articulée (4, 5, 6, 7, 8) entre la section formant manche (1) et la section formant balai (3) se composant d'un pivot (4) monté dans une ouverture de réception adaptée et se présentant sous la forme d'une pyramide tronquée dont la section est un polygone régulier, avantageusement un carré ou un octogone.

2. Appareil de nettoyage selon la revendication 1, **caractérisé en ce que** l'inclinaison des faces latérales du pivot (4) par rapport à l'axe (23) du pivot est compris entre 4° et 15°, avantageusement entre 6° et 9°.

3. Appareil de nettoyage selon l'une des revendications 1 et 2, **caractérisé en ce que** les arêtes entre des faces latérales adjacentes sont arrondies ou chanfreinées et/ou les bords supérieurs de la pyramide tronquée sont arrondis ou chanfreinés.

4. Appareil de nettoyage selon l'une des revendications 1 à 3, **caractérisé en ce qu'**il est prévu sur la partie opposée au pivot (4) une ouverture de réception comportant des parois (7), disposées conformément à la section polygonale du pivot, qui enserrent le pivot (4) au niveau d'au moins deux côtés opposés, les faces intérieures des parois (7) étant conformées de façon à porter sensiblement sur toute la surface extérieure des parois associées du pivot (4).

5. Appareil de nettoyage selon l'une des revendications 1 à 4, **caractérisé en ce que** le pivot (4) comporte dans sa face frontale un évidement circulaire central tandis qu'un pivot cylindrique adapté (6), qui est apte à être reçu dans l'évidement central du pivot polygonal, s'étend sur la partie opposée entre les parois de l'ouverture de réception.

6. Appareil selon la revendication 5, **caractérisé en ce que** le pivot cylindrique (6) est conformé en pivot creux et est ouvert au moins sur son côté qui est opposé à l'ouverture de réception cylindrique du pivot polygonal.

7. Appareil de nettoyage selon l'une des revendications 1 à 6, **caractérisé en ce que** la section formant balai (3) et la section formant manche (1) sont engagés élastiquement l'un avec l'autre avec précontrainte au niveau de leur liaison articulée.

8. Appareil de nettoyage selon la revendication 6 et 7, **caractérisé en ce qu'**une tête de commande (12), comportant une tige de commande et un ressort (10) entourant celle-ci, est reçue dans le pivot creux, la tige de commande étant guidée dans un alésage ménagé dans la face frontale du pivot cylindrique (8) et étant reliée à la section formant balai (3) via une vis ou des éléments d'encliquetage.

9. Appareil de nettoyage selon l'une des revendications 1 à 8, **caractérisé en ce que** la section formant manche et la section formant balai sont au moins partiellement en polystyrol résistant au choc, l'épaisseur de paroi de l'ouverture de réception recevant le pivot polygonal (4) étant d'au moins 2 mm, avantageusement d'au moins 3 ou 4 mm.

10. Appareil de nettoyage selon l'une des revendications 1 à 9, **caractérisé en ce que** la section formant manche est télescopique et comporte des tubes métalliques déplaçables de façon télescopique les uns dans les autres.

11. Appareil de nettoyage selon l'une des revendications 1 à 10, **caractérisé en ce qu'**un élément de raclage de glace (2) est monté sur la section formant manche (1) à l'extrémité, opposée à la section formant balai (3), de l'appareil de nettoyage.

12. Appareil de nettoyage selon la revendication 11, **caractérisé en ce que** l'élément de raclage de glace (2) est rotatif autour d'un axe longitudinal (13) de la section formant manche (1) par rapport la section formant balai montée à l'extrémité opposée.

13. Appareil de nettoyage selon la revendication 11 ou 12, **caractérisé en ce que** l'élément de raclage de glace (2) comporte une lame de raclage de glace (11 ) avantageusement amovible et une partie de raclage dotée d'une lèvre de raclage élastique (20).

14. Appareil de nettoyage selon la revendication 13, **caractérisé en ce que** la lame de raclage de glace (11) et la lèvre élastique (20) de l'élément de raclage s'étendent sensiblement parallèlement l'une à l'autre et sensiblement perpendiculairement à l'axe longitudinal (13) de la section formant manche (1 ).

15. Appareil de nettoyage selon la revendication 14, **caractérisé en ce que** la lèvre élastique (20) de l'élément de raclage est conformée pour être entre 10 et 50% plus longue que la lame de raclage de glace (11).

16. Appareil selon l'une des revendications 1 à 14, **caractérisé en ce que** la section formant manche (1) comporte au moins partiellement une enveloppe en matière plastique qui est dotée de son côté de bagues périphériques en matière plastique (18) qui sont formées sur ladite enveloppe à distance les unes des autres et qui améliorent la préhension de la section formant manche (1).
